# EUROPÄISCHE PATENTANMELDUNG

(11) **EP 4 782 131 A1**
(43) Veröffentlichungstag der Anmeldung: **29.07.2026**
(21) Anmeldenummer: 25153486.3
(22) Anmeldetag: 23.01.2025
(51) Int. Cl.: B23B 29/034

(54) **WERKZEUGSCHLITTENVERSTELLVORRICHTUNG UND VERFAHREN ZUR WERKZEUGSCHLITTENVERSTELLUNG**

(71) Anmelder: CERATIZIT Besigheim GmbH, 74354 Besigheim (DE)
(72) Erfinder: MAIER, Jens, 74354 Besigheim (DE); KATZER, Jochen, 74354 Besigheim (DE); MÜLLER, Sophie, 74354 Besigheim (DE)
(74) Vertreter: Ciesla, Dirk

(57) **Zusammenfassung**

Werkzeugschlittenverstellvorrichtung (1), umfassend einen bezüglich einer Drehachse (2a, 32) drehantreibbaren Grundkörper (3), einen bezüglich der Drehachse (2a, 32) quer verstellbar und selbsthemmend an dem Grundkörper (3) gelagerten Werkzeugschlitten (4, 27), einen Antriebsstrang (5) zum verstellbaren Antrieb des Werkzeugschlittens (4, 27) und eine Steuereinheit (17) zur Ansteuerung des Antriebsstrangs (5), wobei die Steuereinheit (17) derart ausgebildet ist, dass sie in einem aktivierten Zustand den Antriebsstrang (5) ansteuernd ist, so dass der Antriebsstrang (5) den Werkzeugschlitten (4, 27) verstellt, bis der Werkzeugschlitten (4, 27) eine vorgegebene Zielposition erreicht hat, und dass die Steuereinheit (17) den Antriebstrang (5) dann in dem für die Dauer einer gespeicherten Reaktionszeit des Werkzeugschlittens (4, 27) oder eines Anteils dieser Reaktionszeit umgekehrt ansteuernd ist.

## Beschreibung

Die vorliegende Erfindung betrifft eine Werkzeugschlittenverstellvorrichtung und ein Verfahren zur Werkzeugschlittenverstellung.

EP 3 222 375 A1 zeigt ein Bohrwerkzeug mit einem quer zu einer Drehachse beweglich gelagerten Schieber, wobei ein Motor mit dem Schieber verbunden und steuerbar ist, um den Schieber quer zur Drehachse zu bewegen und so den Abstand einer Schneidkante zur Drehachse zu verändern.

Bei dem aus der EP 3 222 375 A1 bekannten Bohrwerkzeug besteht das Bedürfnis, dass sich der Schieber in einer einmal erreichten Position gegenüber dieser von selbst ungewollt verstellt, also ohne, dass der Motor betätigt wird oder dass eine äußere Kraft auf den Schieber ausgeübt wird.

Diese ungewollte Verstellung des Schiebers ist in der Regel sehr gering und liegt im Bereich von wenigen Mikrometern. Trotz der geringen Größe dieser Verstellung kann sie erhebliche Auswirkungen auf die Präzision der Bohrungen haben. Insbesondere bei der Herstellung von Bohrungen mit sehr engen Toleranzen und hohen Anforderungen an die Genauigkeit kann diese selbstständige Verstellung des Schiebers problematisch sein. Sie führt dazu, dass die Durchmesser der Bohrungen nicht die gewünschte Präzision aufweisen, was die Qualität und die Funktionalität der gefertigten Teile beeinträchtigt.

Die Aufgabe der vorliegenden Erfindung besteht darin, eine hochpräzise Werkzeugschlittenverstellvorrichtung und ein hochpräzises Verfahren zur Werkzeugschlittenverstellung bereitzustellen.

Die Aufgabe der vorliegenden Erfindung wird gelöst durch den Gegenstand von Anspruch 1 und 11. Vorteilhafte Weiterbildungen der Erfindung sind den abhängigen Ansprüchen zu entnehmen, die untereinander frei kombinierbar sind.

Gemäß der vorliegenden Erfindung umfasst die Werkzeugschlittenverstellvorrichtung einen bezüglich einer Drehachse drehantreibbaren Grundkörper, einen bezüglich der Drehachse quer verstellbar und selbsthemmend an dem Grundkörper gelagerten Werkzeugschlitten, einen Antriebsstrang zum verstellbaren Antrieb des Werkzeugschlittens und eine Steuereinheit zur Ansteuerung des Antriebsstrangs, wobei die Steuereinheit derart ausgebildet ist, dass sie in einem aktivierten Zustand den Antriebsstrang ansteuernd ist, so dass der Antriebsstrang den Werkzeugschlitten verstellt, bis der Werkzeugschlitten eine vorgegebene Zielposition erreicht hat, und dass die Steuereinheit den Antriebstrang dann in dem aktivierten Zustand für die Dauer einer gespeicherten Reaktionszeit des Werkzeugschlittens oder eines Anteils der Reaktionszeit umgekehrt ansteuernd ist.

Indem die Steuereinheit den Antriebstrang in dem aktivierten Zustand für die Dauer der gespeicherten Reaktionszeit des Werkzeugschlittens oder des Anteils der Reaktionszeit umgekehrt ansteuernd ist, wird der Antriebsstrang mechanisch entspannt. Auf diese Weise wird die mechanische Verspannung des Antriebstrangs abgebaut. Denn beim erstmaligen Verstellen in die vorgegebene Zielposition verwindet sich der Antriebsstrang üblicherweise. Die so aufgebaute Spannung baut sich üblicherweise, mitunter sogar schlagartig bei der Handhabung der Werkzeugschlittenverstellvorrichtung ab, so dass die Selbsthemmung des Werkzeugschlittens zwar geringfügig aber für hochpräzise Anwendungen dennoch in problematischer Weise überwunden wird. In gleicherweise sind auch thermische Spannungen oder eine thermische Ausdehnung des Antriebstrangs problematisch, wenn die Werkzeugschlittenverstellvorrichtung in einer kalten Umgebung montiert und der Werkzeugschlitten in dieser Umgebung auf die vorgegebene Zielposition verstellt wird, und dann die Temperatur ansteigt, woraufhin der Antriebsstrang die Selbsthemmung überwindet und wiederrum den Werkzeugschlitten zumindest geringfügig aus der vorgegebene Zielposition heraus verstellt.

Mit "quer zur Drehachse verstellbar" und dergleichen ist im Sinne der vorliegenden Offenbarung üblicherweise "senkrecht zur Drehachse" gemeint, vorzugsweise jedoch "ausschließlich senkrecht zur Drehachse". "Umgekehrt ansteuernd" und dergleichen meint im Sinne der vorliegenden Offenbarung, dass der Antriebsstrang durch die Steuereinheit so angesteuert wird, dass der Werkzeugschlitten beim Überschreiten der Reaktionszeit in die Richtung verstellt werden würde, die der Richtung entgegengesetzt ist, in die der Werkzeugschlitten beim erstmaligen Erreichen, also bevor die erfindungsgemäße Entspannung des Antriebsstrangs stattgefunden hat, verstellt wurde. Bei einem rotatorisch arbeitenden Antriebsstrang wäre dann bei dessen umgekehrter Ansteuerung durch die Steuereinheit dies zum Beispiel eine Rechtsdrehung, wenn der Werkzeugschlitten unter einer Linksdrehung des Antriebsstrangs in die vorgegebene Zielposition durch eine Ansteuerung mit der Steuereinheit verstellt wurde, bevor die erfindungsgemäße Entspannung des Antriebsstrangs stattgefunden hat.

Die Reaktionszeit ist die Zeit, die ab der Aktivierung der Antriebsstrangs, zum Beispiel dem Starten einer Antriebseinheit des Antriebsstrangs, bis zum Ingangsetzen des Werkzeugschlittens durch den Antriebsstrang benötigt wird. Diese Zeit umfasst die Überwindung der Selbsthemmung des Werkzeugschlittens.

Die Werkzeugschlittenverstellvorrichtung ist von einer Verstellvorrichtung verschieben, bei der der Werkzeugschlitten durch eine der mechanischen Verspannung des Antriebsstrangs entgegenwirkende Gegenspannung in Position gehalten wird, indem der Antriebsstrang bei der Werkzeugschlittenverstellvorrichtung nach der Erfindung demgegenüber in einen spannungsreduzierten Zustand durch einen einmal zeitgesteuerten Antrieb des Antriebsstrangs auf Basis der gespeicherten Reaktionszeit oder eines Anteils dieser gebracht wird, wodurch zusätzliche Komponenten des Antriebsstrangs zum Entgegenwirkung der mechanischen Verspannung, wie beispielweise eine zusätzliche Antriebseinheit und/oder ein Keilmechanismus, nicht benötigt werden und so auch nicht mehr ein Teil des Antriebsstrangs sein müssen oder sind.

Die Werkzeugschlittenverstellvorrichtung ist üblicherweise als Bohrkopf zum Ausspindeln einer Innenbohrung ausgebildet. Der Werkzeugschlitten weist üblicherweise mindestens ein reversibel lösbar befestigtes Schneidelement auf. Der Antriebsstrang weist üblicherweise einen exzentrischen Verstellmechanismus zur Verstellung des Werkzeugschlittens auf. Unter der Verstellung des Werkzeugschlittens quer zur Drehachse wird dieser üblicherweise so bewegt, dass ein Durchmesser bezüglich der Drehachse dem Werkzeugschlitten zuordenbar ist.

Gemäß einer Weiterbildung ist die Steuereinheit zur Erfassung der Reaktionszeit ausgebildet. Nach dieser Weiterbildung ist die Steuereinheit bereits von Haus aus so ausgestattet, dass sie die Reaktionszeit erfasst. Dies bedeutet, dass die Steuereinheit dann üblicherweise Messmittel und Algorithmen umfasst und/oder mit den Messmitteln zusammenwirkt, diese mitunter selbst aufweist. Die Erfassung der Reaktionszeit durch die Steuereinheit ermöglicht es, dass somit situativ auf verschiedene Verspannungszustände des Antriebsstrang zur Reduktion dieser reagieren kann, indem sie die jeweils relevante Reaktionszeit des Werkzeugschlittens erfassen kann.

Gemäß einer Weiterbildung weist die Werkzeugschlittenverstellvorrichtung eine Zeitmessvorrichtung zur Erfassung der Reaktionszeit des Werkzeugschlittens und eine Positionsmessvorrichtung zur Messung einer Position des Werkzeugschlittens auf. Die Zeitmessvorrichtung und die Positionsmessvorrichtung stellen die Daten bereit, die zur Erfassung der Reaktionszeit benötigt werden, indem die Positionsmessvorrichtung die Verstellung des Querschlittens und damit auch einen Stillstand des Werkzeugschlittens gegenüber dem Grundkörper erfasst und die Zeitmessvorrichtung mit der Positionsmessvorrichtung gekoppelt die Bewegungszeit und damit auch die Stillstandzeit des Werkzeugschlittens erfasst.

Gemäß einer Weiterbildung ist die Steuereinheit den Antriebsstrang in dem aktivierten Zustand derart ansteuernd, dass der Werkzeugschlitten in eine erste Verstellbewegung versetzt wird und so die vorgegebene Zielposition erreicht, und dass der Werkzeugschlitten dann in eine der ersten Verstellbewegung entgegensetzte zweite Verstellbewegung versetzt wird und so in eine gegenüber der vorgegebenen Zielposition andere Position verstellt wird, wobei die Steuereinheit derart ausgebildet und angeordnet ist, dass die Reaktionszeit des Werkzeugschlittens für ein Ingangsetzen der zweiten Verstellbewegung gemessen wird und diese Reaktionszeit oder ein Anteil dieser auf einem mit der Steuereinheit verbundenen Speichermedium für eine vorgegebene Dauer gespeichert wird, indem die Zeitmessvorrichtung mit der Positionsmessvorrichtung derart gekoppelt ist, dass die Messung der Reaktionszeit mit der Ansteuerung bezüglich der zweiten Verstellbewegung beginnt, und indem die Messung der Reaktionszeit ab dem Ingangsetzen der zweiten Verstellbewegung gestoppt wird, wobei die Steuereinheit ferner derart ausgebildet und angeordnet ist, dass der Werkzeugschlitten in die erste Verstellbewegung versetzt wird und so erneut die vorgegebene Zielposition erreicht, wobei nach dem erneuten Erreichen der vorgegebenen Zielposition der Werkzeugschlitten in die zur Richtung der ersten Verstellbewegung entgegensetzte Richtung für die Dauer der gespeicherten Reaktionszeit beziehungsweise eines Anteils dieser Reaktionszeit angesteuert wird. Nach dieser Weiterbildung steuert die Steuereinheit in dem aktivierten Zustand den Antriebsstrang so an, dass der Werkzeugschlitten in die erste Verstellbewegung versetzt wird, um die vorgegebene Zielposition zu erreichen. Nach dem Erreichen der vorgegebenen Zielposition wird der Werkzeugschlitten durch den durch die Steuereinheit angesteuerten Antriebsstrang in die zur Richtung der ersten Verstellbewegung entgegengesetzte Richtung verstellt, wodurch er in die andere Position verstellt wird. Die Zeitmessvorrichtung ist mit der Positionsmessvorrichtung gekoppelt, sodass die Messung der Reaktionszeit mit der Ansteuerung des Antriebsstrangs bezüglich der zweiten Verstellbewegung beginnt und beim Ingangsetzen der zweiten Verstellbewegung gestoppt wird. Die Steuereinheit versetzt den Werkzeugschlitten durch den Antriebsstrang erneut in die erste Verstellbewegung, um die vorgegebene Zielposition wieder zu erreichen. Nach dem erneuten Erreichen der vorgegebenen Zielposition wird der Werkzeugschlitten für die Dauer der gespeicherten Reaktionszeit oder eines Teils davon in die zur Richtung der ersten Verstellbewegung entgegengesetzte Richtung angesteuert. Der Antriebsstrang wird durch die zweite Verstellbewegung mechanisch entspannt.

Gemäß einer Weiterbildung ist die Steuereinheit zur Durchführung einer Plausibilitätsprüfung angeordnet und ausgebildet, so dass die Steuereinheit in einem Prüfzustand prüft, ob die gemessene Reaktionszeit des Werkzeugschlittens eine gespeicherte maximale Zeit einhält. Die Plausibilitätsprüfung dient dazu, die Korrektheit und Zuverlässigkeit der gemessenen Reaktionszeit des Werkzeugschlittens zu überprüfen. Die Steuereinheit wechselt üblicherweise in einen speziellen Prüfzustand. In diesem Zustand führt sie die notwendigen Überprüfungen durch, um sicherzustellen, dass die gemessene Reaktionszeit die gespeicherte maximale Zeit einhält. Diese maximale Zeit stellt eine Obergrenze dar, die nicht überschritten werden sollte, um die Entspannung der Antriebsstrangs zu gewährleisten. Wenn die gemessene Reaktionszeit die gespeicherte maximale Zeit einhält, wird die Reaktionszeit als plausibel betrachtet. Andernfalls wird ein Fehler oder eine Abweichung festgestellt, was auf mögliche Probleme hinweisen könnte. Die Plausibilitätsprüfung ist wichtig, um sicherzustellen, dass die Werkzeugschlittenverstellvorrichtung korrekt und effizient arbeitet, indem Abweichungen von der Reaktionszeit, die beim umgekehrten Ansteuern des Werkzeugschlittens sonst zu einer Verstellung aus der vorgegebenen Zielposition herausführen könnten, frühzeitig erkannt werden.

Gemäß einer Weiterbildung beträgt der Anteil der Reaktionszeit 50 % bis 90 % von der Reaktionszeit. Gemäß dieser Weiterbildung wird ein bestimmter Anteil der gespeicherten Reaktionszeit verwendet. Dieser Anteil liegt zwischen 50 % und 90 % der gesamten Reaktionszeit. Das bedeutet, dass nur ein Teil der gesamten Reaktionszeit für die umgekehrte Ansteuerung des Antriebsstrangs verwendet wird. Bei einem Anteil von 100 % der Reaktionszeit bestünde hingegen aufgrund möglicher Messungenauigkeiten die Möglichkeit, dass der Antriebsstrang zu weit umgekehrt angesteuert wird, mit der Folge, dass sich mechanische Spannung wieder im Antriebsstrang aufbauen könnten.

Gemäß einer Weiterbildung beträgt der Anteil der Reaktionszeit 60 % bis 80 % von der Reaktionszeit. Dadurch wird die Wahrscheinlichkeit, dass der Werkzeugschlitten zu weit zurückgestellt wird, noch weiter reduziert.

Gemäß einer Weiterbildung weist der Antriebsstrang einen Exzentermechanismus auf. Der Exzentermechanismus ist eine spezielle Art von Mechanismus, der eine rotierende Bewegung des Antriebsstrangs in eine lineare Bewegung des Werkzeugschlittens quer zur Drehachse umwandelt. Der Exzentermechanismus ermöglicht eine genaue Steuerung der Bewegung des Werkzeugschlittens quer zur Drehachse, zudem ist er üblicherweise robust und langlebig.

Gemäß einer Weiterbildung weist der Werkzeugschlitten mindestens ein reversibel lösbar gehaltenes Schneidelement auf, das unter der vorgegebenen Zielposition zum Schneiden auf einem Flugkreis angeordnet ist, wobei der Flugkreis einen Durchmesser im Bereich von 2 mm bis 500 mm aufweist. Nach dieser Weiterbildung kann das mindestens eine Schneidelement leicht montiert und demontiert werden, was den Austausch und die Wartung erleichtert. Der Flugkreis beschreibt die Kreisbahn, die das Schneidelement während einer Drehung der Verstellvorrichtung bezüglich der Drehachse abfährt. Der Durchmesser des Flugkreises, auf dem das Schneidelement angeordnet ist, kann im Bereich von 2 mm bis 500 mm variieren. Dies bedeutet, dass das Schneidelement in der Lage ist, Schnitte in einem breiten Spektrum von Größen durchzuführen, abhängig von den spezifischen Anforderungen der Anwendung.

Gemäß einer Weiterbildung ist der Antriebsstrang derart ausgebildet und angeordnet, dass die Reaktionszeit im Bereich von 100 ms bis 1000 ms liegt. Die Reaktionszeit ist dementsprechend kurz, so dass der Werkzeugschlitten dementsprechend schnell und präzise verstellt werden kann.

Gemäß der vorliegenden Erfindung umfasst das Verfahren zur Werkzeugschlittenverstellung die Schritte: a) Verstellen eines selbsthemmend gelagerten Werkzeugschlittens durch Ansteuern eines Antriebsstrang, bis der Werkzeugschlitten eine vorgegebene Zielposition erreicht hat; b) zumindest teilweise mechanisches Entspannen des Antriebsstrangs unter Einhaltung der vorgegebenen Zielposition des Werkzeugschlittens für die Dauer einer Reaktionszeit des Werkzeugschlittens oder eines Anteils dieser Reaktionszeit, indem der Antriebsstrang bezüglich seiner unter Schritt a) erfolgten Ansteuerung umgekehrt angesteuert wird. Dieses Verfahren ermöglicht eine präzise und stabile Positionierung des Werkzeugschlittens, indem es die mechanische Spannung im Antriebsstrang nach dem Erreichen der vorgegebenen Zielposition reduziert. In Schritt a) wird der Antriebsstrang aktiviert, um den Werkzeugschlitten zu verstellen, üblicherweise quer zu einer Drehachse. Dies erfolgt durch gezielte Steuerbefehle, die die Steuereinheit an den Antriebsstrang sendet, zum Beispiel an einen, der üblicherweise durch ein Untersetzungsgetriebe eine Welle antreibt, die einen Exzentermechanismus antreibt, durch welchen der Werkzeugschlitten verstellt wird. Der Werkzeugschlitten wird so lange verstellt, bis er die vorgegebene Zielposition erreicht hat. In Schritt b) findet das mechanische Entspannen des Antriebsstrangs statt. Dies bedeutet, dass die Spannung oder Belastung im Antriebsstrang reduziert wird, um die Stabilität und Präzision der Positionierung zu gewährleisten. Während dieser Entspannungsphase bleibt der Werkzeugschlitten in der vorgegebenen Zielposition. Dies ist wichtig, um sicherzustellen, dass die Position des Schlittens nicht verändert wird, während der Antriebsstrang entspannt wird. Die Entspannung des Antriebsstrangs erfolgt für die Dauer einer Reaktionszeit des Werkzeugschlittens oder eines Anteils dieser Reaktionszeit. Um die Entspannung des Antriebsstrangs zu erreichen, wird der Antriebsstrang umgekehrt angesteuert. Dies bedeutet, dass die Steuerbefehle, die ursprünglich zur Verstellung des Werkzeugschlittens zur Erreichung der vorgegebenen Zielposition des Schlittens verwendet wurden, in umgekehrter Richtung angewendet werden, um die Spannung im Antriebsstrang zu reduzieren.

Gemäß einer Weiterbildung umfasst das Verfahren den weiteren Schritt c): Erfassen und Speichern der Reaktionszeit in einem dem Schritt b) vorgeschalteten Schritt. Durch die Integration des zusätzlichen Schritts c) wird sichergestellt, dass die Reaktionszeit des Werkzeugschlittens genau erfasst und gespeichert wird, bevor die weiteren Schritte des Verfahrens durchgeführt werden. Die gespeicherte Reaktionszeit wird in den nachfolgenden Schritten verwendet, um die Dauer der mechanischen Entspannung des Antriebsstrangs zu bestimmen. Dies stellt sicher, dass die Entspannung präzise und konsistent durchgeführt wird.

Gemäß einer Weiterbildung wird der Werkzeugschlitten in Schritt c) durch den Antriebsstrang in eine erste Verstellbewegung versetzt, bis der Werkzeugschlitten die vorgegebene Zielposition erreicht hat, wobei dann der Werkzeugschlitten durch den Antriebsstrang in eine der ersten Verstellbewegung entgegengesetzte zweite Verstellbewegung versetzt wird, bis der Werkzeugschlitten eine gegenüber der vorgegebenen Zielposition andere Position erreicht hat, wobei die Reaktionszeit für ein Ingangsetzen der zweiten Verstellbewegung gemessen und diese Reaktionszeit oder ein Anteil dieser gespeichert wird, wobei die so gespeicherte Reaktionszeit beziehungsweise ein Anteil dieser in Schritt b) verwendet wird. Nach dieser Weiterbildung des Verfahrens wird der Werkzeugschlitten durch die erste Verstellbewegung in die vorgegebene Zielposition verstellt, wobei der Antriebsstrang dabei dem Aufziehen einer Uhrfeder analog üblicherweise mechanisch verspannt wird. Durch die zweite Verstellbewegung wird der Werkzeugschlitten aus der vorgegebenen Zielposition in die davon verschiedene andere Position verstellt, wobei die zweite Verstellung dazu benutzt wird, die Reaktionszeit zu messen, und diese oder ein Anteil dieser wird gespeichert. Die so gespeicherte Reaktionszeit beziehungsweise ein Anteil dieser wird in Schritt b) verwendet, um den Antriebsstrang für diese Dauer umgekehrt anzusteuern, so dass sich der Antriebstrang dadurch mechanisch entspannt.

Gemäß einer Weiterbildung wird in Schritt c) und/der Schritt b) überprüft, ob die gespeicherte Reaktionszeit kleiner oder gleich einer vorgegebenen maximalen Zeit ist. Dadurch wird überprüft, ob die erfasste Reaktionszeit plausibel ist.

Gemäß einer Weiterbildung umfasst das Verfahren den weiteren Schritt d): Schneiden einer Werkstückoberfläche mit einem an dem Werkzeugschlitten reversibel lösbar befestigten Schneidelement. In dem weiteren Schritt d) wird die Werkzeugschlittenverstellvorrichtung dazu verwendet, die Werkstückoberfläche zu schneiden.

Weitere Vorteile und Zweckmäßigkeiten der Erfindung ergeben sich anhand der nachfolgenden Beschreibung von einem Ausführungsbeispielen unter Bezugnahme auf die beigefügten Figuren.

Von den Figuren zeigen
- Fig. 1:: in einer perspektivischen Darstellung von vorn eine Werkzeugschlittenverstellvorrichtung;
- Fig. 2:: in einer Längsschnittdarstellung einen vorderen Bereich der Werkzeugschlittenverstellvorrichtung;
- Fig. 3:: in einer Längsschnittdarstellung gemäß der Schnittlinie II-II aus Fig. 2 ein Detail aus Fig. 2;
- Fig. 4:: in einer perspektivischen Darstellung von hinten den vorderen Bereich der Werkzeugschlittenverstellvorrichtung;
- Fig. 5a:: in einer schematischen Darstellung einen Werkzeugschlitten;
- Fig. 5b:: in einer schematischen Darstellung den Werkzeugschlitten gemäß Fig. 5a im linkseitig kontaktierenden Eingriff mit einem Exzenterzapfen;
- Fig. 5c:: in einer schematischen Darstellung den Werkzeugschlitten gemäß Fig. 5a im rechtsseitig kontaktierenden Eingriff mit dem Exzenterzapfen;
- Fig. 5d:: in einer schematischen Darstellung den Werkzeugschlitten gemäß Fig. 5a im kontaktfreien Zustand bezüglich des Exzenterzapfens;
- Fig. 6:: in einer schematischen Darstellung den Werkzeugschlitten gemäß Fig. 5a und ein schematisch dargestelltes Positionierkoordinatensystem;
- Fig. 7:: in Form eines Blockdiagramms einen Algorithmus, der auf einem Speichermedium der Steuereinheit der Werkzeugschlittenverstellvorrichtung gespeichert ist.

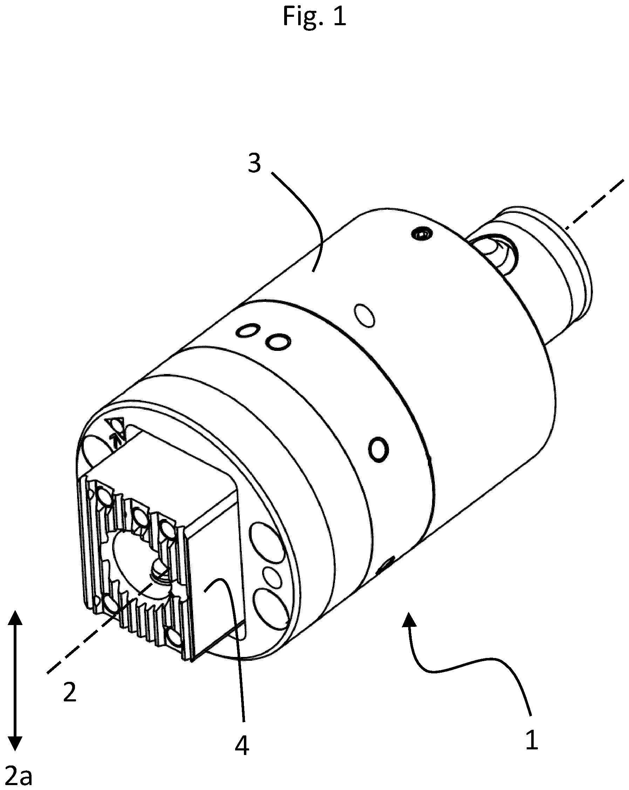

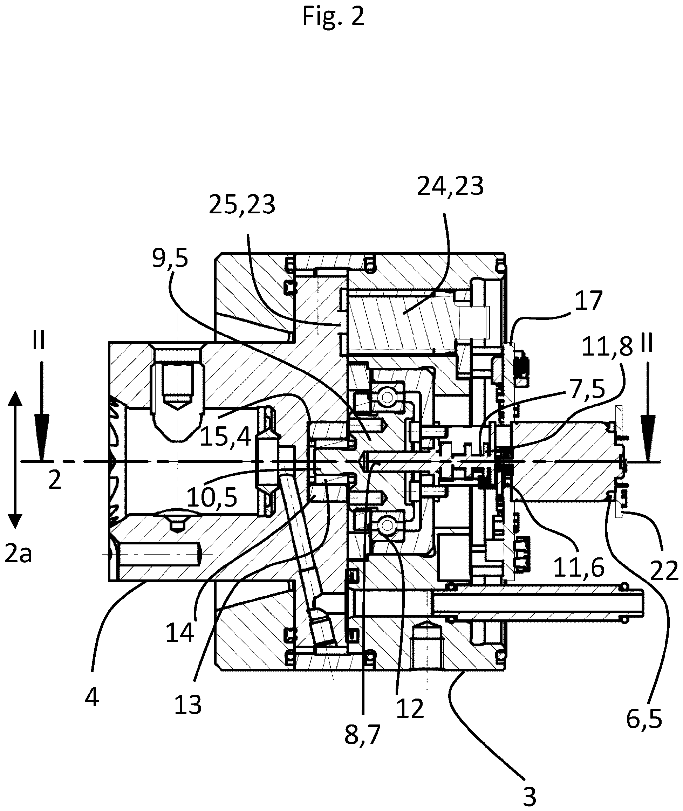

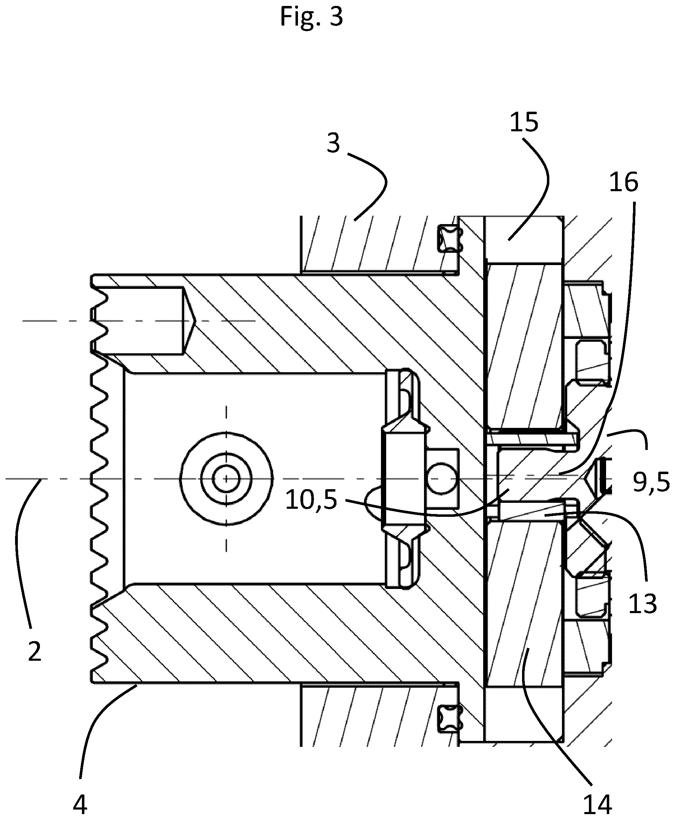

Fig. 1 zeigt eine Werkzeugschlittenverstellvorrichtung 1. Die Werkzeugschlittenverstellvorrichtung 1 umfasst einen bezüglich einer Drehachse 2 drehantreibbaren Grundkörper 3 und einen bezüglich der Drehachse 2 senkrecht verstellbar und selbsthemmend an dem Grundkörper 3 gelagerten Werkzeugschlitten 4; der Werkzeugschlitten ist in die Richtungen des Doppelpfeils 2a senkrecht zur Drehachse 2 verstellbar. Fig. 2 zeigt in einer Längsschnittdarstellung parallel und zentral zur Drehachse 2 einen Längsschnitt durch einen vorderen Teil der Werkzeugschlittenverstellvorrichtung 1 in der Ebene, in der die Bewegung des Werkzeugschlittens 4 stattfindet. In Fig. 2 ist zu erkennen, dass die Werkzeugschlittenverstellvorrichtung 1 einen Antriebsstrang 5 zum verstellbaren Antrieb des Werkzeugschlittens 4 umfasst. Der Antriebsstrang 5 weist auf: einen Elektromotor 6, ein Untersetzungsgetriebe 7 mit einer Getriebewelle 8 und eine Exzenterwelle 9 mit einem Exzenterzapfen 10. Ein Ritzel 11 des Elektromotors 6 greift in ein Getrieberad 12 des Untersetzungsgetriebes 7 ein, so dass die Getriebewelle 8 durch eine Drehung des Ritzels 11 zentrisch bezüglich der Drehachse 2 gedreht wird, und zwar mit einer gegenüber dem Ritzel 11 niedrigeren Drehzahl, zum Beispiel einer um einen Faktor 1000 niedrigeren Drehzahl. Die so angetriebene Getriebewelle 8 ist drehfest mit der Exzenterwelle 9 verbunden, so dass der Elektromotor 7 die Exzenterwelle 8 antreibt. Die Exzenterwelle 8 ist durch ein Wälzkugellager 12 relativ zum Grundkörper 3 an dem Grundkörper 3 drehbar gelagert. Der Exzenterzapfen 10 ist exzentrisch bezüglich der Drehachse 2 an der Exzenterwelle 8 ausgebildet, so dass der Exzenterzapfen 10 bei einer Drehung der Exzenterwelle 8 und damit der Getriebewelle 8 um die Drehachse 2 orbitiert. In der in Fig. 2 gezeigten Position des Werkzeugschlittens 4 befindet sich der Werkzeugschlitten 4 in der Mitte zwischen den bezüglich Fig. 2 oben und unten befindlichen möglichen Endpositionen, so dass die Exzenterwelle 8 in dieser Nullposition mit der Drehachse 2 fluchtet. Der Exzenterzapfen 10 ist durch ein Nadellager 13 drehbar in einem Nutenstein 14 gelagert. Der Nutenstein 14 ist in einer sich senkrecht zu der Zeichnungsebene der Fig. 2 längserstreckenden Ausnehmung 15 des Werkzeugschlittens 4 gleitend gegenüber dem Werkzeugschlitten 4 gelagert. Der Nutenstein 15 gleitet in der Ausnehmung 15 je nach Drehrichtung und Drehwinkelbetrag bezüglich Fig. 2 nach oben oder nach unten, wodurch der Werkzeugschlitten 4 dementsprechend nach oben beziehungsweise nach unten, also in eine der Richtungen des Doppelpfeils 2a verstellt wird, während der Nutenstein 14 gleichzeitig bezüglich der Zeichnungsebene von Fig. 2 senkrecht zu und aus dieser heraus beziehungsweise senkrecht zu und in diese hineingleitet. Der Nutenstein 14 führt diese Bewegung aufgrund der in Fig. 3 im Detail gezeigten Exzentrizität zwischen der zentralen Längsachse 16 des Exzenterzapfens 10 und der Drehachse 2 aus, so dass der Antriebsstrang 5 somit einen Exzentermechanismus aufweist.

Fig. 3 stellt in einer perspektivischen Darstellung von hinten den vorderen Bereich des Grundkörpers 3 im gegenüber dem übrigen Grundkörper 3 demontierten Zustand dar. In Fig. 3 ist besonders gut zu erkennen, dass die Werkzeugschlittenverstellvorrichtung 1 ferner eine Steuereinheit 17 umfasst, die in exemplarischer Weise eine Platine 18 umfasst, die mit einem Mikroprozessor 19 und einem elektronischen Speicher 20 bestückt ist. Die Steuereinheit 17 ist derart ausgebildet, also programmiert und auf Basis von Steuerbefehlen ansteuerbar, dass die Steuereinheit 17 in einem aktivierten Zustand den Elektromotor 6 durch seine Motorsteuereinheit 21, die eine der Steuereinheit 17 analog bestückte eine Platine 22 umfasst, zunächst so ansteuert, dass der Elektromotor 6 den Antriebsstrang 5 antreibt, also das Ritzel 11 wie bezüglich Fig. 2 und Fig. 3 beschrieben wurde, dreht, so dass der Werkzeugschlitten 4 in eine vorgegebene Zielposition senkrecht zur Drehachse 2 verstellt wird. Üblicherweise geschieht dies so, dass ein Bediener einen Steuerbefehl bezüglich der Steuereinheit 18 in Form eines sogenannten "Prompts" an einem User-Interface eingibt, so dass der Werkzeugschlitten 4 z.B. 200 µm aus seiner in Fig. 2 gezeigten Nullposition nach oben oder unten (bei anderer Blickrichtung links oder rechts) verstellt wird. Beim solchermaßen Erreichen der vorgegebenen Zielposition verwindet sich üblicherweise der Antriebsstrang 5, üblicherweise insbesondere im Bereich der Getriebewelle 8, und/oder verbiegt sich üblicherweise der Exzenterzapfen 10 bezüglich der Drehachse 2, so dass sich der Antriebsstrang 5 in einem mechanischen vorgespannten Zustand befindet, nachdem der Werkzeugschlitten 4 die vorgegebene Zielposition erreicht hat. Die Steuereinheit 17 ist derart ausgebildet, dass sie in einem weiteren aktivierten Zustand, der zum Beispiel automatisch aktiviert wird, den Antriebsstrang 5 so ansteuernd ist, dass die Steuereinheit 17 den Antriebstrang 5 für die Dauer eines in dem Speicher 20 gespeicherten Anteils der Reaktionszeit des Werkzeugschlittens 4 den Werkzeugschlittens 4 bezüglich des Erreichens der vorgegebenen Zielposition umgekehrt ansteuert, also wenn die Getriebewelle 7 für das Erreichen der vorgegebenen Zielposition zunächst im Uhrzeigersinn gedreht wurde, wird sie danach aufgrund eines entsprechenden Steuerbefehls gegen den Uhrzeigersinn für die Dauer des gespeicherten Anteils der Reaktionszeit des Werkzeugschlittens 4 gedreht, so dass der Antriebsstrang 5 dementsprechend mechanisch entspannt wird, also dass die Getriebewelle 7 zumindest weniger stark verwunden und der Exzenterzapfen zumindest weniger stark verbogen ist, also mit geringeren, durch den Werkzeugschlitten 4 aufgebrachten Reaktionskräften seitlich beaufschlagt wird. Der Werkzeugschlitten 4 verbleibt dabei, weil die Reaktionszeit des Werkzeugschlittens 4 nicht überschritten wird, in der vorgegebenen Zielposition. Das beschriebene Verwinden des Antriebsstrangs 5 und das beschriebene Verbiegen im Bereich des Exzenterzapfens 10 ist zwar üblicherweise minimal, also optisch üblicherweise nicht zu erkennen, aber dennoch für eine gleichbleibend präzise Einhaltung des Werkzeugschlittens 4 in der vorgegebenen Zielposition problematisch, so dass die durch die Steuereinheit 17 durch Ansteuern des Antriebsstrangs 5 bewirkte mechanische Entspannung des Antriebsstrangs 5 wichtig ist, insbesondere wenn µm-Toleranzen bezüglich der Position des Werkzeugschlittens 4 eingehalten werden müssen.

Da der Werkzeugschlitten 4 selbsthemmend gelagert ist, bewegt er sich erst dann aus der vorgegebenen Zielposition heraus, wenn eine durch einen Kontakt mit dem Grundkörper 3 definierte Selbsthemmungskraft überwunden wird, indem der Exzenterzapfen 10 die Selbsthemmungskraft durch seine gegenüber der Drehachse 2 exzentrische Verstellung überwindet. Das Ansteuern des Antriebsstrangs 5 für die Dauer des gespeicherten Anteils, zum Beispiel 60 % beziehungsweise 180 ms, der Reaktionszeit des Werkzeugschlittens 4, zum Beispiel 300 ms, stellt sicher, dass der Werkzeugschlitten 4 beim umgekehrten Ansteuern durch die Steuereinheit 17 zur mechanischen Entspannung des Antriebsstrangs 5 nicht aus der vorgegebenen Zielposition herausverstellt wird; bei einem Überschreiten der Reaktionszeit des Werkzeugschlittens 4, also dass die Getriebewelle 5 länger also die Reaktionszeit des Werkzeugschlittens 4 von zum Beispiel 300 ms angesteuert wird, zum Beispiel für eine Dauer von 500 ms, würde hingegen die Getriebewelle 5 so lange gedreht und damit der Exzenterzapfen 10 exzentrisch soweit verstellt werden, dass der Werkzeugschlitten 4 die vorgegebene Zielposition verlassen würde.

Die Werkzeugschlittenverstellvorrichtung 1 ist zur Erfassung der Reaktionszeit des Werkzeugschlittens 4 ausgebildet. Hierfür weist die Werkzeugschlittenverstellvorrichtung 1 eine in Fig. 2 dargestellte Positionsmessvorrichtung 23 innerhalb des Grundkörper 3 auf. Die Positionsmessvorrichtung 23 arbeitet nach einem magnetischen Prinzip und umfasst ein erstes Messelement 24 und ein an dem Werkzeugschlitten 4 in Form eines Vorsprungs ausgebildetes zweites Messelement 25, das in die Richtungen des Doppelpfeils 2a gegenüber dem ersten Messelement 24 bei einer Verstellung des Werkzeugschlittens 4 senkrecht zur Drehachse 2 mitverstellt wird. Durch eine solche relative Bewegung zwischen den ersten Messelement 24 und dem zweiten Messelement 25 wird ein statisches Magnetfeld relativ bewegt und dies vom dem ersten Messelement 24 erfasst, so dass auf Basis davon die Position des Werkzeugschlittens 4 erfasst und an die Steuereinheit 17 übermittelt wird. Die Platine 18 umfasst als Teil der Steuereinheit 17 einen Timer 26, der mit der Positionsmessvorrichtung 23 elektronisch gekoppelt ist, so dass der Timer 26 die Zeit stoppt, die der Werkzeugschlitten 4 stillsteht und auch die Zeit, die der Werkzeugschlitten 4 bewegt wird.

Die Steuereinheit 17 erfasst die Reaktionszeit des Werkzeugschlittens 4, indem die Steuereinheit 17 den Antriebsstrang 5 in dem aktivierten Zustand derart ansteuernd ist, dass der Werkzeugschlitten 4 durch den Antriebsstrang 5 in eine erste Verstellbewegung versetzt wird und so die vorgegebene Zielposition ausgehend von einer beliebigen Ist-Position, welche auch die Null-Position sein kann, erreicht. Der Werkzeugschlitten 4 wird dann als zweites, also nachdem der Werkzeugschlitten 4 die vorgegebene Zielposition erreicht hat, durch den durch die Steuereinheit 17 angesteuerten Antriebsstrang 5 in eine der ersten Verstellbewegung entgegensetzte zweite Verstellbewegung verstellt, also wenn die erste Verstellbewegung nach oben bezüglich Fig. 2 gerichtet war, ist die zweite Verstellbewegung dann nach unten bezüglich Fig. 2 gerichtet. Der Werkzeugschlitten 4 wird durch die zweite Verstellbewegung in eine von der vorgegebenen Zielposition andere Position verstellt. Die Steuereinheit ist derart ausgebildet, also programmiert, und angeordnet, also mit der Steuereinheit 21 kommunizierend angeordnet, dass die Reaktionszeit des Werkzeugschlittens 4 für ein Ingangsetzen der zweiten Verstellbewegung durch den Timer 26 gemessen wird, indem der Timer 26 aufgrund der Kopplung mit der Positionsmessvorrichtung 23 die Zeit stoppt, die ab dem Einschalten des Elektromotors 6 bis zum Start der Bewegung des Werkzeugschlittens 4 aus der vorgegebenen Zielposition heraus vergeht. Dies ist die Reaktionszeit des Werkzeugschlittens 4. Ein Anteil der Reaktionszeit, zum Beispiel 60 %, des Werkzeugschlittens 4 wird dann auf dem Speicher 20 für eine vorgegebene Dauer gespeichert.

Die Steuereinheit 17 ist ferner derart ausgebildet, also programmiert, und angeordnet, also mit der Steuereinheit 21 kommunizierend verbunden, dass der Werkzeugschlitten 4 durch eine Ansteuerung des Antriebsstrangs 5 wieder in die erste Verstellbewegung versetzt wird und so erneut die vorgegebene Zielposition erreicht. Nach dem erneuten Erreichen der vorgegebenen Zielposition steuert die Steuereinheit 17 den Antriebsstrang 5 dann in die zur ersten Verstellbewegung entgegensetzte zweite Richtung, also in die Richtung der zweiten Verstellbewegung für die Dauer des gespeicherten Anteils Reaktionszeit des Werkzeugschlittens 4 an. Dadurch wird der Antriebsstrang 5 mechanisch entspannt, während die vorgegebene Zielposition eingehalten wird.

Die Steuereinheit 17 ist ferner dazu ausgebildet, also programmiert, und angeordnet, dass sie in einem Prüfzustand nach der beschriebenen Erfassung der Reaktionszeit des Werkzeugschlittens 4 prüft, ob die gemessene Reaktionszeit des Werkzeugschlittens 4 eine maximale gespeicherte Zeit einhält, wodurch die Steuereinheit 17 zur Durchführung einer Plausibilitätsprüfung angeordnet und ausgebildet. Sollte die gemessene Reaktionszeit des Werkzeugschlittens 4 aufgrund eines Defekts des Timers 26 größer als es tatsächlich der Fall ist gemessen worden sein, würde der Werkzeugschlitten 4 bei der umgekehrten Ansteuerung des Antriebsstrangs 5 durch die Steuereinheit 17 für die Dauer des Anteils der Reaktionszeit des Werkzeugschlittens 4 die vorgegebene Zielposition verlassen. Indem die Steuereinheit 17 die beschriebene Plausibilitätsprüfung durchführt, wird ein solches Übersteuern des Antriebsstrangs 5 aufgrund eines Fehlers beim Erfassen der Reaktionszeit des Werkzeugschlittens 4 vermieden.

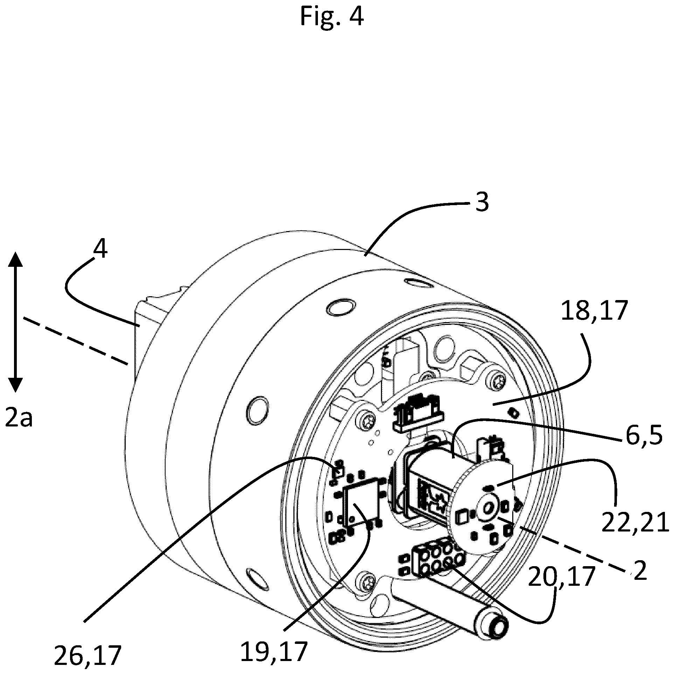

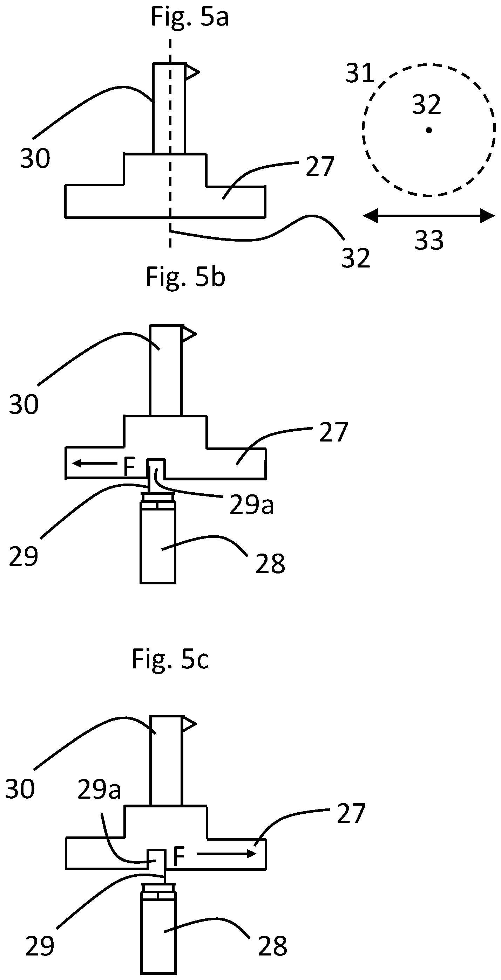

Fig. 5a bis 5d zeigen in einer grobschematischen Darstellung jeweils einen dem Werkzeugschlitten 4 analogen Werkzeugschlitten 27 und Fig. 5b bis 5d zusätzlich in einer grobschematischen Darstellung jeweils eine der Exzenterwelle 9 analoge Exzenterwelle 28 mit einem Exzenterzapfen 29 der innerhalb einer der Ausnehmung 15 analogen Ausnehmung 29a zur bezüglich Fig. 5b bis 5d seitlichen (rechts/links) Verstellung des Werkzeugschlittens 27 auf Basis eines dem bezüglich Fig. 1 und 4 beschriebenen Exzentermechanismus analogen Exzentermechanismus. Der Werkzeugschlitten 27 ist reversibel lösbar mit einem Schneidelement 30 verbunden, welches zum Schneiden auf einem in Fig. 5a schematisch angedeuteten Flugkreis 31 angeordnet ist, wobei der Flugkreis 31 bezüglich einer der Drehachse 2 analogen Drehachse 32 zentriert ist und dessen Flugkreisdurchmesser 33 durch die Position des Werkzeugschlittens 27 definiert ist; der Flugkreis 31 wird in achsparalleler Blickrichtung auf die Drehachse 32 dargestellt, der Werkzeugschlitten 27 hingegen in Blickrichtung senkrecht auf die Drehachse 32. Der Flugkreisdurchmesser 33 beträgt exemplarisch 100 mm, was im Bereich 2 mm bis 500 mm liegt.

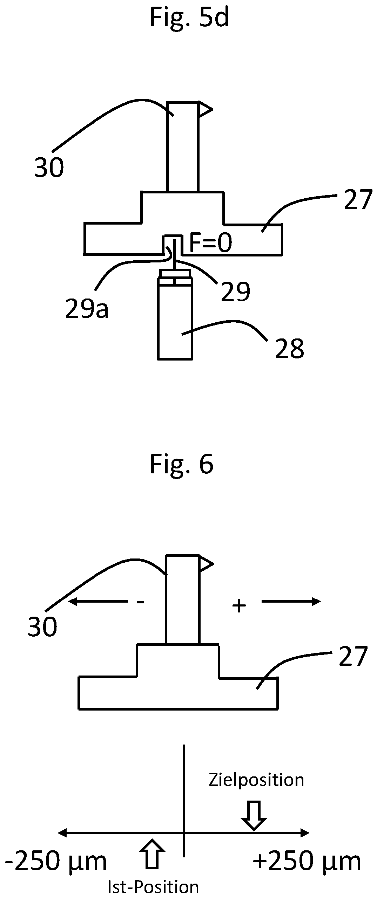

Fig. 5a bis 5d und Fig. 6 verdeutlichen bei gleichbleibender vorgegebener Zielposition des Werkzeugschlittens 27 und in übertriebener Weise, dass der Exzenterzapfen 29 gemäß Fig. 5b beim Erreichen der vorgegebenen Zielposition des Werkzeugschlittens 27 diesen zunächst seitlich kontaktiert und so durch die Reaktionskraft F verspannt wird und gemäß Fig. 5c bei einem umgekehrten Antrieb des Exzenterzapfens 29, der die Dauer der Reaktionszeit des Werkzeugschlittens 4 gerade eben überschritten hat, den Werkzeugschlitten 4 an einer zur Fig. 5b gegenüberliegenden Stelle wiederum verspannt kontaktiert. Wird der Exzenterzapfen 29 und damit die Exzenterwelle 28 hingegen für die Dauer der Reaktionszeit des Werkzeugschlittens 27 oder für einen Anteil der Dauer der Reaktionszeit des Werkzeugschlittens 27 bezüglich des zur Erreichung der vorgegebenen Zielposition erfolgten Antriebs der Exzenterwelle 28 ausgehend von dem verspannten Zustand gemäß Fig. 5b, welcher auch als erstmaliges Erreichen der vorgegebenen Zielposition bezeichnet werden kann, umgekehrt angetrieben, wird der Exzenterzapfen 29 zum Beispiel in die Fig. 5d dargestellte Position verstellt, in der die Reaktionskraft F faktisch null beträgt. Fig. 5a bis 5d sollen lediglich exemplarisch veranschaulichen, wie mechanische Verspannungen im Sinne der vorliegenden Offenbarung abgebaut werden.

Fig. 6 zeigt exemplarisch, dass der Werkzeugschlitten 27 nach rechts oder links, durch "-" und "+" markiert, verstellt werden kann, also senkrecht zur in Fig. 5a dargestellten Drehachse 32. Das Positionierkoordinatensystem in Fig. 6 unterhalb der Darstellung des Werkzeugschlittens 27 zeigt exemplarisch, dass der Werkzeugschlitten 27 um 250 µm nach links und 250 µm rechts verstellbar ist und innerhalb dieses Bereichs von einer beliebigen Ist-Position in eine Zielposition verstellt werden kann.

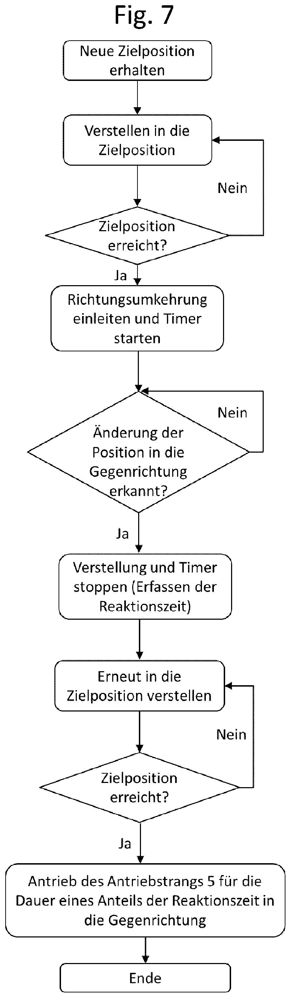

Fig. 7 zeigt exemplarisch einen Algorithmus, mit dem die Steuereinheit 17 programmiert ist. So beginnt eine Verstellung des Werkzeugschlittens 4 damit, dass die Steuereinheit 17 eine neue Zielposition erhält, die dadurch zu der vorgegebenen Zielposition wird. Der Antriebsstrang 5 wird dann durch die Steuereinheit 17 auf Basis des Algorithmus so angesteuert, bis der Werkzeugschlitten 4 die vorgegebene Zielposition verstellt wurde. Durch den Algorithmus wird dies durch die Abfrage "Zielposition erreicht" geprüft. Wenn diese Abfrage mit "Ja" aufseiten der Steuereinheit 17 beantwortet wird, steuert diese den Antriebsstrang 5 umgekehrt an, also so, dass der Antriebsstrang 5 eine Richtungsumkehr des Werkzeugschlittens einleitet und der Timer 26 zur Ermittlung der Reaktionszeit des Werkzeugschlittens 4 gestartet wird. Durch den Algorithmus wird dann abgefragt, ob das Positionsmesssystem 23 eine Änderung der Position des Werkzeugschlittens 4 in die Gegenrichtung (Gegenrichtung zu der Richtung, in die der Werkzeugschlitten 4 zum Erreichen der vorgegebenen Zielposition verstellt wurde) erkannt hat. Wenn dies aufseiten der Steuereinheit 17 mit "Ja" beantwortet wird, wird die Verstellung des Werkzeugschlittens 4 gestoppt, indem die Steuereinheit 17 den Antriebsstrang 5 durch einen entsprechenden Stopp-Befehl stoppt. Ein Anteil der so ermittelten Reaktionszeit des Werkzeugschlittens 4 wird in der Steuereinheit 17 gespeichert. Die Steuereinheit 17 steuert den Antriebsstrang auf Basis des Algorithmus daraufhin so an, dass der Werkzeugschlitten 4 erneut in die vorgegebene Zielposition verstellt wird. Durch den Algorithmus wird dies durch die Abfrage "Zielposition erreicht" geprüft. Wenn diese Abfrage mit "Ja" aufseiten der Steuereinheit 17 beantwortet wird, stoppt die Steuereinheit 17 den Antriebsstrang 5. Daraufhin steuert die Steuereinheit 17 den Antriebsstrang für die Dauer des Anteils der Reaktionszeit in die Gegenrichtung an (Gegenrichtung zu der Richtung, in die der Werkzeugschlitten 4 zum erneuten Erreichen der vorgegebenen Zielposition verstellt wurde). Dadurch wird der Antriebsstrang 5 entspannt und die Werkzeugschlittenverstellung 1 kann mit dem so präzise verstellten und die vorgegebene Zielposition besser einhaltenden Werkzeugschlitten 4 bestimmungsgemäß verwendet werden, gemäß des in Fig. 1 bis 4 gezeigten Designs der Werkzeugschlittenverstellvorrichtung 1 insbesondere zum Ausspindeln einer Bohrung.

Fig. 1 bis 4 offenbaren zusammen mit Fig. 7 ein Verfahren zur Werkzeugschlittenverstellung, umfassend die Schritte: a) Verstellen des selbsthemmend gelagerten Werkzeugschlittens 4 durch Ansteuern des Antriebsstrangs 5, bis der Werkzeugschlitten 4 die vorgegebene Zielposition erreicht hat; b) zumindest teilweise mechanisches Entspannen des Antriebsstrangs 5 unter Einhaltung der vorgegebenen Zielposition des Werkzeugschlittens 4, indem die Steuereinheit 17 den in Fig. 7 gezeigten Algorithmus ausführt, wobei die Reaktionszeit des Werkzeugschlittens 4 dabei vor der Entspannung des Antriebsstrangs 5 erfasst und gespeichert wird und die beschriebene Plausibilitätsprüfung bezüglich der Reaktionszeit durgeführt wird, also ob sie kleiner oder gleich einer vorgegebenen maximalen Zeit ist beziehungsweise diese überschreitet, wonach der Algorithmus gemäß Fig. 7 dann abgebrochen wird und eine entsprechende Fehlermeldung erzeugt wird. In einem weiteren Schritt wird die Werkzeugschlittenverstellvorrichtung 1 zum Schneiden einer Werkstückoberfläche mit einem an dem Werkzeugschlitten 4 reversibel lösbar befestigten Schneidelement 30 verwendet.

Fig. 1 bis 4 stellen eine Werkzeugschlittenverstellvorrichtung 1 dar, bei der die Steuereinheit 17 auf Basis des in Fig. 7 gezeigten Algorithmus so programmiert ist, dass sie nach einem erstmaligen Erreichen der vorgegebenen Zielposition des Werkzeugschlittens 4 den Antriebsstrang 5 diesbezüglich für die Dauer eines Anteils der Reaktionszeit des Werkzeugschlittens 4 ansteuert, wodurch der Antriebsstrang 5 mechanisch entspannt wird und der Werkzeugschlitten 4 die vorgegebene Zielposition einhält. Der Fachmann versteht, dass die konkrete Form und Ausgestaltung der Werkzeugschlittenverstellvorrichtung 1, insbesondere des Grundköpers 3, des Werkzeugschlittens 4 und des Antriebsstrangs 5 zwar vorteilhaft ist, die durch die Steuereinheit 17 erreichbare Entspannung des Antriebsstrangs 5 aber auch mit anderen Grundkörpern, Werkzeugschlitten, Antriebssträngen und anderen Steuereinheit funktioniert, die insbesondere für bezüglich des Ausspindelns einer Bohrung anderen Zerspanungsverfahren verwendet werden können, bei denen der Werkzeugschlitten jeweils weiterhin selbsthemmend an einem Grundkörper gelagert ist und bei denen die Steuereinheit nach dem in Fig. 7 gezeigten Algorithmus programmiert ist.

Die Steuereinheit 17 ist gemäß Fig. 7 im Zusammenwirken mit dem Timer 5 und der Positionsmessvorrichtung 13, die auch als Teil der Steuereinheit 17 betrachtet werden kann, ferner dazu programmiert, dass sie die Reaktionszeit des Werkzeugschlittens 4 erfasst, indem sie den Werkzeugschlitten 4 ausgehend von der zuerst erreichten vorgegebenen Zielposition, als der externen Vorgabe der Zielposition, durch eine diesbezüglich umgekehrte Ansteuerung des Antriebsstrang 5 in eine andere Position verstellt und dabei die Zeit stoppt, die vergeht, bis sich der Werkzeugschlitten 4 bewegt.

## Patentansprüche

1. Werkzeugschlittenverstellvorrichtung (1), umfassend einen bezüglich einer Drehachse (2a, 32) drehantreibbaren Grundkörper (3), einen bezüglich der Drehachse (2a, 32) quer verstellbar und selbsthemmend an dem Grundkörper (3) gelagerten Werkzeugschlitten (4, 27), einen Antriebsstrang (5) zum verstellbaren Antrieb des Werkzeugschlittens (4, 27) und eine Steuereinheit (17) zur Ansteuerung des Antriebsstrangs (5), wobei die Steuereinheit (17) derart ausgebildet ist, dass sie in einem aktivierten Zustand den Antriebsstrang (5) ansteuernd ist, so dass der Antriebsstrang (5) den Werkzeugschlitten (4, 27) verstellt, bis der Werkzeugschlitten (4, 27) eine vorgegebene Zielposition erreicht hat, und dass die Steuereinheit (17) den Antriebstrang (5) dann in dem für die Dauer einer gespeicherten Reaktionszeit des Werkzeugschlittens (4, 27) oder eines Anteils dieser Reaktionszeit umgekehrt ansteuernd ist.

2. Werkzeugschlittenverstellvorrichtung (1) nach Anspruch 1, wobei die Steuereinheit (17) zur Erfassung der Reaktionszeit ausgebildet ist.

3. Werkzeugschlittenverstellvorrichtung (1) nach Anspruch 2, wobei die Werkzeugschlittenverstellvorrichtung (1) eine Zeitmessvorrichtung (26) zur Erfassung der Reaktionszeit des Werkzeugschlittens (4, 27) und eine Positionsmessvorrichtung (23) zur Messung einer Position des Werkzeugschlittens (4, 27) aufweist.

4. Werkzeugschlittenverstellvorrichtung (1) nach Anspruch 3, wobei die Steuereinheit (17) den Antriebsstrang (5) in dem aktivierten Zustand derart ansteuernd ist, dass der Werkzeugschlitten (4, 27) in eine erste Verstellbewegung versetzt wird und so die vorgegebene Zielposition erreicht, und dass der Werkzeugschlitten (4, 27) dann in eine der ersten Verstellbewegung entgegensetzte zweite Verstellbewegung versetzt wird und so in eine gegenüber der vorgegebenen Zielposition andere Position verstellt wird, wobei die Steuereinheit (17) derart ausgebildet und angeordnet ist, dass die Reaktionszeit des Werkzeugschlittens (4, 27) für ein Ingangsetzen der zweiten Verstellbewegung gemessen wird und diese Reaktionszeit oder ein Anteil dieser auf einem mit der Steuereinheit (17) verbundenen Speichermedium (20) für eine vorgegebene Dauer gespeichert wird, indem die Zeitmessvorrichtung (26) mit der Positionsmessvorrichtung (23) derart gekoppelt ist, dass die Messung der Reaktionszeit mit der Ansteuerung bezüglich der zweiten Verstellbewegung beginnt, und indem die Messung der Reaktionszeit ab dem Ingangsetzen der zweiten Verstellbewegung gestoppt wird, wobei die Steuereinheit (17) ferner derart ausgebildet und angeordnet ist, dass der Werkzeugschlitten (4, 27) in die erste Verstellbewegung versetzt wird und so erneut die vorgegeben Zielposition erreicht, wobei nach dem erneuten Erreichen der vorgegebenen Zielposition der Werkzeugschlitten (4, 27) in die zur Richtung der ersten Verstellbewegung entgegensetzte Richtung für die Dauer der gespeicherten Reaktionszeit beziehungsweise eines Anteils dieser Reaktionszeit angesteuert wird.

5. Werkzeugschlittenverstellvorrichtung (1) nach Anspruch 4, wobei die Steuereinheit (17) zur Durchführung einer Plausibilitätsprüfung angeordnet und ausgebildet, so dass die Steuereinheit (17) in einem Prüfzustand prüft, ob die gemessene Reaktionszeit eine gespeicherte maximale Zeit einhält.

6. Werkzeugschlittenverstellvorrichtung (1) nach einem der vorhergehenden Ansprüche, wobei der Anteil der Reaktionszeit 50 % bis 90 % von der Reaktionszeit beträgt.

7. Werkzeugschlittenverstellvorrichtung (1) nach Anspruch 6, wobei der Anteil der Reaktionszeit 60 % bis 80 % von der Reaktionszeit beträgt.

8. Werkzeugschlittenverstellvorrichtung (1) nach einem der vorhergehenden Ansprüche, wobei der Antriebsstrang (5) einen Exzentermechanismus aufweist.

9. Werkzeugschlittenverstellvorrichtung (1) nach einem der vorhergehenden Ansprüche, wobei der Werkzeugschlitten (4, 27) mindestens ein reversibel lösbar gehaltenes Schneidelement (30) aufweist, das unter der vorgegebenen Zielposition zum Schneiden auf einem Flugkreis (31) angeordnet ist, wobei der Flugkreis (31) einen Durchmesser (33) im Bereich von 2 mm bis 500 mm aufweist.

10. Werkzeugschlittenverstellvorrichtung (1) nach einem der vorhergehenden Ansprüche, wobei der Antriebsstrang (5) derart ausgebildet und angeordnet ist, dass die Reaktionszeit im Bereich von 100 ms bis 1000 ms liegt.

11. Verfahren zur Werkzeugschlittenverstellung, umfassend die Schritte:
a) Verstellen eines selbsthemmend gelagerten Werkzeugschlittens (4, 27) durch Ansteuern eines Antriebsstrangs (5), bis der Werkzeugschlitten (4, 27) eine vorgegebene Zielposition erreicht hat;
b) zumindest teilweise mechanisches Entspannen des Antriebsstrangs (5) unter Einhaltung der vorgegebenen Zielposition des Werkzeugschlittens (4,27) für die Dauer einer Reaktionszeit des Werkzeugschlittens (4, 27) oder eines Anteils dieser Reaktionszeit, indem der Antriebsstrang (5) bezüglich seiner unter Schritt a) erfolgten Ansteuerung umgekehrt angesteuert wird.

12. Verfahren nach Anspruch 11, umfassend den weiteren Schritt c): Erfassen und Speichern der Reaktionszeit in einem dem Schritt b) vorgeschalteten Schritt.

13. Verfahren nach Anspruch 12, wobei der Werkzeugschlitten (4, 27) in Schritt c) durch den Antriebsstrang (5) in eine erste Verstellbewegung versetzt wird, bis der Werkzeugschlitten (4, 27) die vorgegebene Zielposition erreicht hat, wobei dann der Werkzeugschlitten (4, 27) durch den Antriebsstrang (5) in eine der ersten Verstellbewegung entgegengesetzte zweite Verstellbewegung versetzt wird, bis der Werkzeugschlitten (4,27) eine gegenüber der vorgegebenen Zielposition andere Position erreicht hat, wobei die Reaktionszeit für ein Ingangsetzen der zweiten Verstellbewegung gemessen und diese Reaktionszeit oder ein Anteil dieser gespeichert wird, wobei die so gespeicherte Reaktionszeit beziehungsweise ein Anteil dieser in Schritt b) verwendet wird.

14. Verfahren nach Anspruch 13, wobei in Schritt c) und/der Schritt b) überprüft wird, ob die gespeicherte Reaktionszeit kleiner oder gleich einer vorgegebenen maximalen Zeit ist.

15. Verfahren nach einem der Ansprüche 11 bis 14, umfassend den weiteren Schritt d): Schneiden einer Werkstückoberfläche mit einem an dem Werkzeugschlitten (4, 27) reversibel lösbar befestigten Schneidelement (30).
